# EUROPÄISCHE PATENTANMELDUNG

(11) **EP 1 424 642 A1**
(43) Veröffentlichungstag der Anmeldung: **02.06.2004**
(21) Anmeldenummer: 02026635.9
(22) Anmeldetag: 29.11.2002
(51) Int. Cl.: G06F 17/50, G06T 17/20, B23Q 35/46

(54) **Verfahren und Vorrichtung zur Erzeugung eines Formmodells, insbesondere für Karosserieteile von Kraftfahrzeugen**

(71) Anmelder: Horst Witte Entwicklungs- und Vertriebs-KG, 21369 Nahrendorf (DE)
(72) Erfinder: Witte, Andreas, 21354 Bleckede (DE)
(74) Vertreter: von Raffay, Vincenz, Dipl.-Ing.

(57) **Zusammenfassung**

Das Verfahren zur Erzeugung eines Formmodells, insbesondere für Karosserieteile von Kraftfahrzeugen, ist durch folgende Merkmale gekennzeichnet:
a) Aufbereitung des Flächenmodells im CAD-Format eines CAD-Systems;
b) Erzeugung von Spantenkonturen durch Schnitte (1) in dem CAD-System durch ein entsprechendes Programm (Fig. 1);
c) Erzeugung von Spanten (2) in dem CAD-System mit Steckschlitzen, Befestigungsmitteln und weiteren Positionierhilfen (Fig. 2);
d) Herstellung der Spanten (2) aus Blech mit den in c) ermittelten Parametern (Fig. 4);
e) Verbinden der Spanten (2) zu einem Fachwerk entsprechend der unter a) erzeugten Schnitte (Fig. 3);
f) Befestigen eines Träger- oder Amierungsgitters (5) auf dem Fachwerk (Fig. 5);
g) Auftragen einer Modellpaste (6) auf das Gitter (5) (Fig. 6);
h) Bearbeiten der erhärteten Modellpaste zur Erzeugung des gewünschten Endzustandes des Formmodells (Fig. 7).

Durch dieses Verfahren wird kostengünstig ein leichtes und stabiles Modell hergestellt, das mit Hilfe entsprechender Rasteröffnungen auf der Rückseite der Spanten an einem Grundrahmen befestigt werden kann, um es entsprechend wunschgemäß als Modell einzusetzen und weiter zu verwenden

## Beschreibung

Die Erfindung betrifft ein Verfahren nach dem Oberbegriff des Anspruches 1 und ein nach diesem Verfahren hergestelltes Formmodell.

Formmodelle (Design, DKM, Cubings, Mock-Ups) für mittlere bis große Objekte, wie z.B. PKWs werden zur geschmacklichen, benutzungsfreundlichen Beurteilung und als Referenz-/Urform eingesetzt. Trotz der Möglichkeit, ein realitätsnähes Modell im Computer zu erzeugen (Digital Mock Up), wird zumindest bei Neuentwicklungen und Prototypen ein reales Modell benötigt.

In der Regel werden zwei oder mehrere separate Modelle hergestellt, die jeweils einen Teil des Gesamtobjekts repräsentieren (z.B. Außenform und Innenform).

Der Aufbau für ein Kfz-Außenmodell besteht aus einem Grundrahmen mit größtenteils orthogonal zueinander angeordneten Positionier- und Anschraubflächen an dem mehrere Einzelformen (z.B. Kotflügel, Türen, Seitenwand usw.) in Originallage angebracht werden.

Die Einzelmodelle wurden bisher hergestellt:
1) aus einem einteiligen Materialblock (Aluminium, Kunststoff, Schaumstoff) zerspant
2) aus einem mehrteiligen, geklebten Materialblock zerspant
3) aus einem Gusswerkstück (vorherige Herstellung einer Form nötig) zerspant
4) aus Spanten und einer übergespannten Haut (Folie, Blech)

| | Vorteile | Nachteile |
|---|---|---|
| 1) | keine Form nötig | hoher Material- und Zeitverbrauch Verformung durch Eigenspannungen Hohes Gewicht (Metall) |
| 2) | keine Form nötig geringerer Materialverbrauch zu 1) | sichtbare Klebefugen Verformung durch Eigenspannungen Hohes Gewicht |
| 3) | geringerer Material- und Zeitverbrauch geringeres Gewicht zu 1) und 2) | aufwändige Guss-Form nötig |
| 4) | geringerer Material- und Zeitverbrauch geringes Gewicht | ungenaue Endform bzw. hoher Zeit-aufwand für Nacharbeit |

Besonders für die Ausführungen 1 bis 3 werden sehr stabile, schwere Rahmen benötigt, da das Gesamtgewicht sehr hoch ist.

Der Erfindung liegt nun die Aufgabe zugrunde, ein Verfahren zur Erzeugung eines Formmodells der geschilderten Art zu schaffen, das kostengünstig hergestellt werden kann und leichter ist, als die vergleichbaren bekannten Formmodelle, so daß es auf herkömmlichen leichten Grundrahmen befestigt werden kann, insbesondere unter Ausnutzung der durch den Grundrahmen vorgegebenen Rastersysteme zur Befestigung.

Derartige Grundrahmen können nach einem Rastersystem aufgebaut werden, das beispielsweise aus der EP 222 147 bekannt ist.

Die Aufgabe wird grundsätzlich durch die Verfahrensschritte nach Anspruch 1 gelöst.

Die mit Hilfe der Schnitte in dem CAD-System erzeugten Spanten und ggf. Hilfsspanten werden zu dem Fachwerk zusammengefügt, beispielsweise durch Zusammenstecken mit Hilfe entsprechend ausgebildeter Steckschlitze. Auf diesen Spanten wird das Träger- oder Amierungsgitter, beispielsweise aus Streckmetall befestigt. Die Kontur ist dann kleiner als die gewünschte Endkontur. Hierauf wird dann die Formpaste aufgebracht, die erhärtet und ein festes räumliches Gebilde bildet. Die Formkontur ist nunmehr größer als diejenige des herzustellenden Modells. Nun wird dieser Rohkörper mechanisch bearbeitet, so daß das Formmodell in seinem gewünschten Endzustand entsteht. Dieses relativ leichte Gebilde kann dann auf einem Grundrahmen befestigt werden. Auf der Innenseite sind an den Spanten Öffnungen vorgesehen, die das Befestigen an einem Grundrahmen ermöglichen, wobei die Abmessungen und Raster der Öffnungen mit denjenigen des in dem Grundrahmen übereinstimmen können. Weiterhin können an den Spanten in den Hohlräumen im Inneren weitere Funktionselemente wie Fensterheber und dgl. befestigt werden.

Als Befestigungsmittel können angewachsene Zapfen an den Spanten dienen, die ggf. auch ein Maß für die Dicke der aufzubringenden Modellpaste darstellen. Es sind aber auch andere Befestigungsmittel wie Schlingen und Klammern denkbar.

Das fertige Modell kann direkt und positioniergenau an dem Grundrahmen befestigt werden. Es ist eigenstabil, leicht und schnell herzustellen. Die Notwendigkeit eines sehr stabilen und schweren Grundrahmens entfällt. Das Gesamtgewicht sinkt erheblich. Durch die Verwendung dünner Spantenbleche in großzügigen Abständen können die verbleibenden Hohlräume zum Einbau weiterer Funktionselemente und zur Ausbildung von Öffnungen genutzt werden.

Im folgenden wird die Erfindung unter Hinweis auf die Zeichnung anhand eines Ausführungsbeispieles näher erläutert.

Es zeigt:
- Fig. 1: eine schematische Ansicht der Schnitte eines Flächenmodells im CAD-System;
- Fig. 2: die entsprechend der Schnitte in dem CAD-System dargestellten Spanten;
- Fig. 3: die Darstellung der Fig. 2 in dem CAD-System mit eingeblendetem Formmodell im Endzustand;
- Fig. 4: die Konturen der einzelnen Spanten zugeordnet zu einer der Fig. 2 entsprechenden Darstellung, jedoch von der Rückseite des Spantenmodells;
- Fig. 5: das durch die Spanten erzeugte räumliche Fachwerk mit einem aufgebrachten Trägergitter;
- Fig. 6: das Rohmodell nach dem Aufbringen der Modellpaste;
- Fig. 7: das fertige Formmodell nach dem Bearbeiten;
- Fig. 8: das fertiggestellte Formmodell befestigt an einem Grundrahmen;
- Fig. 9: einen Schnitt durch eine Ausführungsform eines Formmodells mit an den Spanten angewachsenen Zapfen zur Befestigung des Trägergitters; und
- Fig. 10: einen der Fig. 9 entsprechenden Schnitt durch eine andere Ausführungsform, bei der das Trägergitter mit Hilfe von Schlingen oder Klammern befestigt wurde.

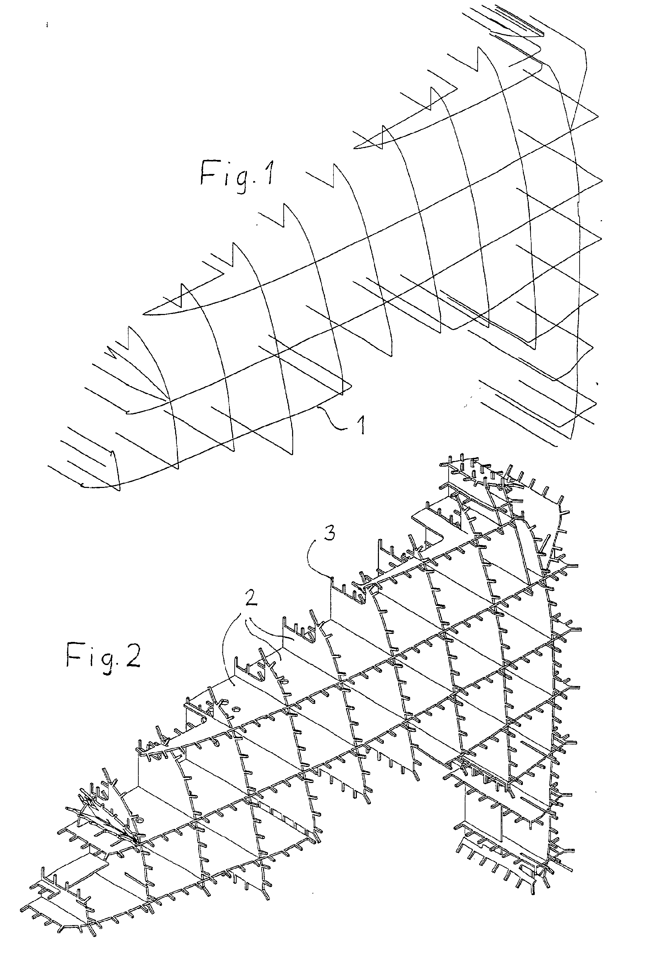

Mit Hilfe der Zeichnung werden die einzelnen wesentlichen Schritte zur Herstellung des Formmodells näher erläutert. Fig. 1 zeigt im CAD-System erzeugte Darstellung der Schnitte durch das Formmodell. Diese Schnitte 1 dienen zur Erzeugung und Darstellung der Spanten 2 zum Aufbau des räumlichen Fachwerkes so wie in Fig. 2 dargestellt. Die in Fig. 2 dargestellte Ausführungsform ist mit angewachsenen Zapfen 3 zur Befestigung eines Trägergitters versehen. Es sind aber auch andere Befestigungsmittel denkbar.

Fig. 3 zeigt im CAD-System eine Darstellung der Fig. 2 mit eingeblendetem Formmodell 4.

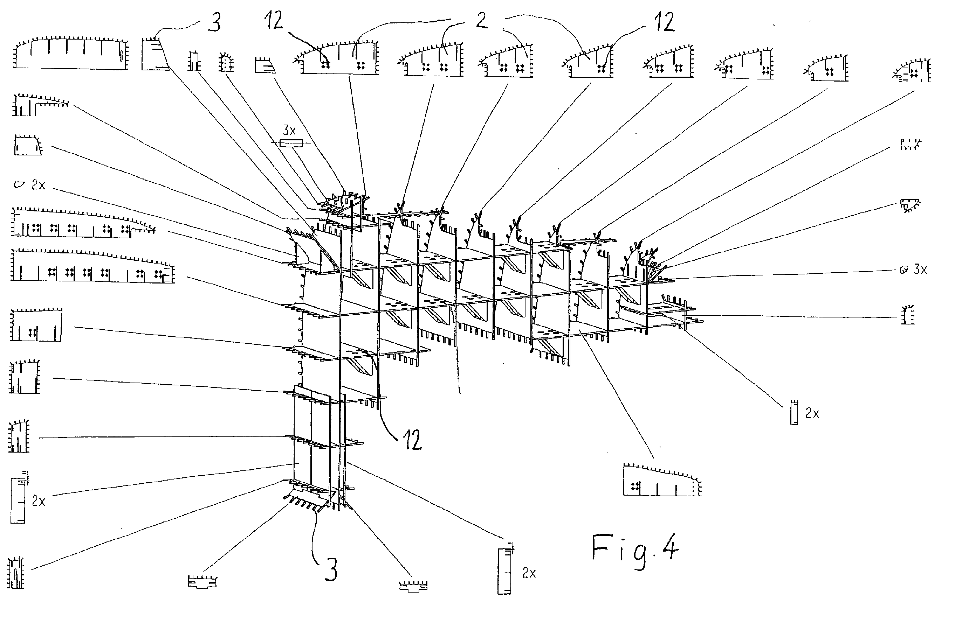

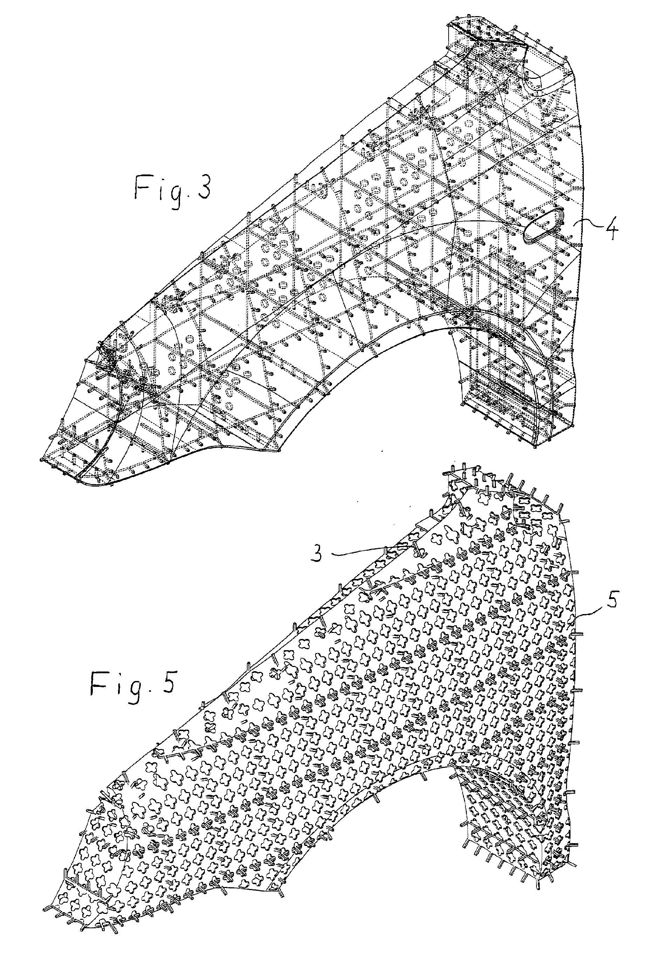

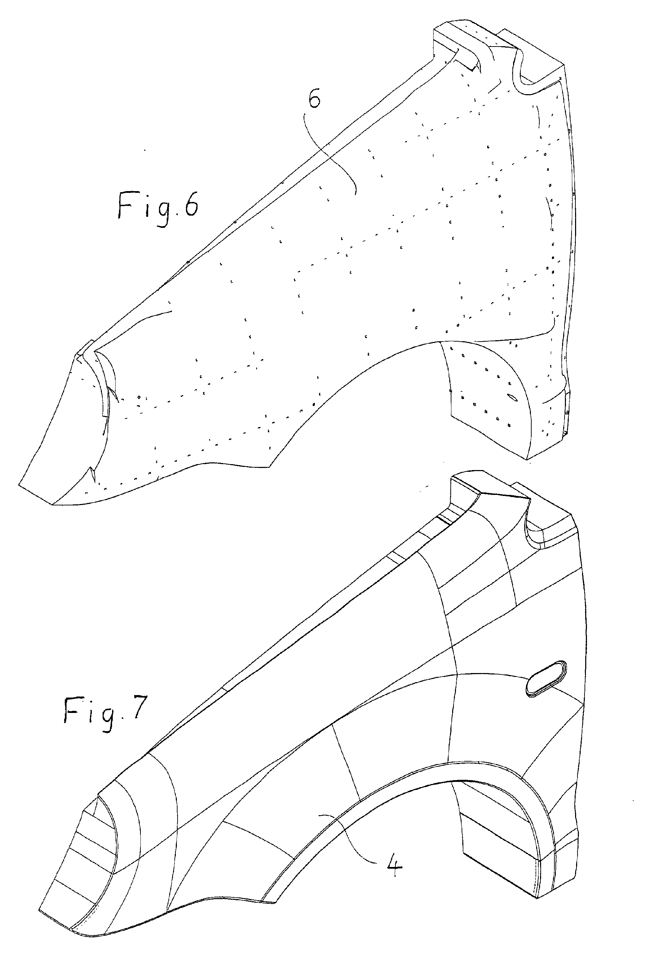

Mit Hilfe der CAD-Darstellung werden dann die einzelnen Spanten in ihren Konturen dargestellt (Fig. 4), so daß sie aus relativ dünnem Blech hergestellt werden können. Diese Spanten werden dann zu einem räumlichen Fachwerk zusammengesetzt, so wie es in der CAD-Darstellung nach Fig. 2 gezeichnet ist. Auf diesem räumlichen Fachwerk, gebildet durch die Spanten 2, wird ein Streckgitter 5 (Fig. 5) befestigt, das ein Träger- oder Amierungsgitter bildet. Auf dieses Gitter wird dann eine Formpaste aus zwei Komponenten Epoxidharz aufgebracht, wie in Fig. 6 dargestellt ist. Es sind aber auch andere Formpasten wie Gips, Ton oder andere Kunststoffe einsetzbar.

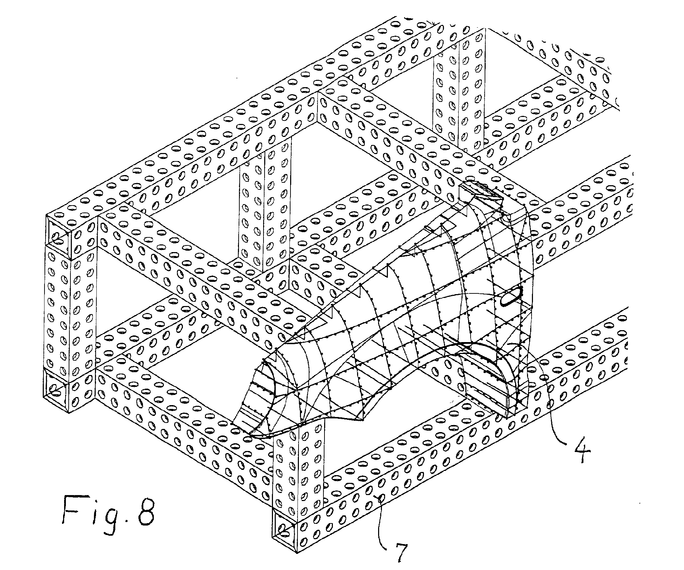

Nach dem Erhärten der aufgebrachten Formpaste erfolgt eine mechanische Bearbeitung auf dem gewünschten Endzustand, so wie in Fig. 7 dargestellt. Das fertige Modell kann dann an einem Grundrahmen 7 befestigt werden (Fig. 8). Wie in Fig. 4 dargestellt befinden sich auf der Rückseite Rasterbohrungen 12, mit deren Hilfe das Formmodell an entsprechenden Rasterbohrungen des Grundrahmens 7 befestigt werden kann. Die Rasterbohrungen dienen auch der Befestigung anderer Funktionselemente, wenn dieses erwünscht ist.

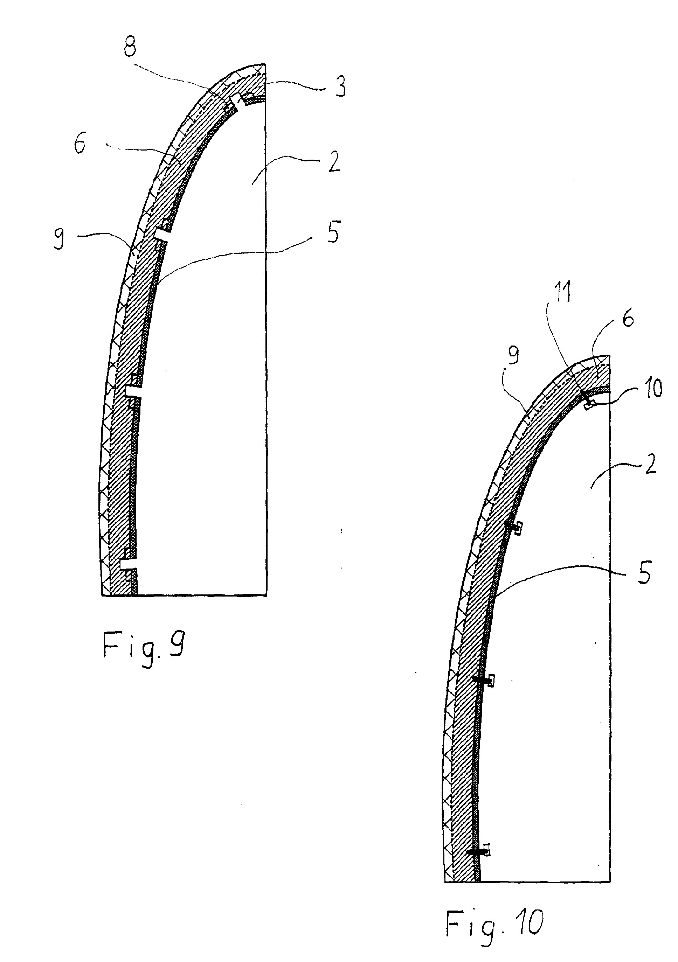

In den Figuren 9 und 10 sind zwei unterschiedliche Ausführungsformen als Schnitt durch das fertiggestellte Modell dargestellt.

Bei der Ausführungsform nach Fig. 9 sind an den Spanten 2 angewachsene Zapfen 3 vorhanden, auf die zum Halten des Streckgitters 5 Federringe 8 aufgesetzt sind. Die mit 6 bezeichnete Modellpaste wurde, wie bei 9 angedeutet, mechanisch bearbeitet. Die mit 9 bezeichnete Schicht veranschaulicht symbolisch die mechanische Bearbeitung.

Die Ausführungsform nach Fig. 10 unterscheidet sich dadurch, daß anstelle der angewachsenen Zapfen Klammern 11 vorhanden sind, die in Öffnungen 10 eingreifen.

Die Arbeitsabfolge zur Herstellung des Formmodells kann wie folgt zusammengefaßt werden:
- Aufbereitung des Flächenmodells im jeweiligen CAD-Format (Löschen nicht benötigter Partien wie Anschlußflansche, Falzungen usw., Schließen von Durchbrüchen und Bohrungen, Vergrößerung von Flächen in Richtung Grundrahmen)
- Automatische Erzeugung der Spantkonturen durch Erzeugung von Schnitten (a)
- Manuelle Nachbearbeitung bzw. Ergänzung von Spanten in bauteilspezifischen Regionen (b)
- Schneiden der Spante aus einer Blechtafel (c)
- Kleben und/oder Schrauben der Spante (d)
- Aufbringen des Streckgitters (e)
- Aufbringen der Formmasse (Bepasten) (f)
- Erstellen eines CNC-Zeilenfräsprogrammes und Bearbeitung des Modells

(a) Durch ein Programm (Script, Makro), das innerhalb eines CAD-Systems ausgeführt wird und nach Eingabe von Parametern die notwendigen Rechenoperationen aufruft, werden die Spantkonturen automatisch erzeugt. Die zum Zusammenstecken erforderlichen Schlitze und die Positionierbohrungen werden automatisch generiert.
(b) In besonderen Bauteilregionen (z.B. Unstetigkeiten, Wechsel der Topologie, Engstellen) können zusätzliche Spanten manuell dazugefügt werden.
(c) Die erzeugten Konturen werden in ein CAD-neutrales Format konvertiert (DXF) und können ohne weitere manuelle Aufbereitung zum Schneiden (Laser, Wasserstrahl, Nibbeln, Fräsen) verwendet werden.
(d) Als Positionierhilfe dient ein Rahmen
(e) Maschengitter, Folie, Streckgitter, Bänder, Drähte
(f) z.B. Kunststoffpaste mit Metallpulverzusatz

## Patentansprüche

1. Verfahren zur Erzeugung eines Formmodells, insbesondere für Karosserieteile von Kraftfahrzeugen, **gekennzeichnet durch** folgende Merkmale:
a) Aufbereitung des Flächenmodells im CAD-Format eines CAD-Systems;
b) Erzeugung von Spantenkonturen **durch** Schnitte (1) in dem CAD-System **durch** ein entsprechendes Programm (Fig. 1);
c) Erzeugung von Spanten (2) in dem CAD-System mit Steckschlitzen, Befestigungsmitteln und weiteren Positionierhilfen (Fig. 2);
d) Herstellung der Spanten (2) aus Blech mit den in c) ermittelten Parametern (Fig. 4);
e) Verbinden der Spanten (2) zu einem Fachwerk entsprechend der unter a) erzeugten Schnitte (Fig. 3);
f) Befestigen eines Träger- oder Amierungsgitters (5) auf dem Fachwerk (Fig. 5);
g) Auftragen einer Modellpaste (6) auf das Gitter (5) (Fig. 6);
h) Bearbeiten der erhärteten Modellpaste zur Erzeugung des gewünschten Endzustandes des Formmodells (Fig. 7).

2. Formmodell, **gekennzeichnet durch** die Herstellung nach dem Verfahren nach Anspruch 1.

3. Formmodell nach Anspruch 2, **dadurch gekennzeichnet, daß** die Befestigungsmittel für das Gitter (5) durch an den Spanten angewachsene Zapfen gebildet sind (Fig. 9).

4. Formmodell nach Anspruch 3, **dadurch gekennzeichnet, daß** die angewachsenen Zapfen (3) länger sind als die Dicke der aufgetragenen Modellpaste und beim Bearbeiten der Paste entsprechend gekürzt werden.

5. Formmodell nach Anspruch 2, **dadurch gekennzeichnet, daß** die Befestigungsmittel durch Drahtschlingen oder Klammern (11) gebildet sind, die in Öffnungen (10) in den Spanten (2) eingreifen (Fig. 10).

6. Formmodell nach einem der vorstehenden Ansprüche 2 bis 5, **dadurch gekennzeichnet, daß** in den Spanten (2) Rasteröffnungen (12) zur Befestigung an einem Grundrahmen (7) vorgesehen sind (Fig. 8).
